# FASCICULE DE BREVET EUROPEEN

(11) **EP 3 538 885 B1**
(45) Date de publication et mention de la délivrance du brevet: **10.03.2021**
(21) Numéro de dépôt: 17805281.7
(22) Date de dépôt: 13.11.2017
(51) Int. Cl.: G01N 29/22, G01M 17/02, G01N 29/265

(54) **DISPOSITIF DE CONTROLE POUR PNEUMATIQUE DE VÉHICULES DE GENIE CIVIL ET PROCÉDE DE CONTROLE CORRESPONDANT**
STEUERUNGSVORRICHTUNG FÜR TIEFBAUFAHRZEUGREIFEN UND ENTSPRECHENDES STEUERUNGSVERFAHREN
CONTROL DEVICE FOR CIVIL-ENGINEERING VEHICLE TYRE AND CORRESPONDING CONTROL METHOD

(30) Priorité: 14.11.2016 FR 1670680
(43) Date de publication de la demande: 18.09.2019
(73) Titulaire: Compagnie Générale des Etablissements Michelin, 63000 Clermont-Ferrand (FR)
(72) Inventeur: MOUROUGAYA, François, 63040 Clermont-Ferrand Cedex 09 (FR); CHARLAT, Julien, 63040 Clermont-Ferrand Cedex 9 (FR)
(74) Mandataire: Roussy, Delphine
(86) Numéro de dépôt international: PCT/IB2017/057080
(87) Numéro de publication internationale: WO 2018/087726

(56) Documents cités:
- GB-A- 665 153
- US-A- 3 882 717
- US-A- 5 095 744

## Description

### DOMAINE TECHNIQUE DE L'INVENTION

La présente invention concerne un dispositif de contrôle de pneumatiques de grandes dimensions, pour véhicules de génie civil, comprenant un support de pneumatique prévu pour supporter un pneumatique à contrôler et un module de contrôle. Elle concerne également un procédé de contrôle de pneumatique.

### ETAT DE LA TECHNIQUE ANTERIEURE

Les pneumatiques pour engins de génie civil sont classiquement de dimensions très grandes, tel que 58 à 63 pouces (147,32 cm à 160,02 cm). Ces pneumatiques sont très lourds et encombrants, et donc très difficiles à manipuler. Les qualités et l'intégrité de ces pneumatiques font l'objet de contrôles minutieux très stricts. Par exemple, on utilise des techniques de rayons X afin de contrôler les renforts internes, invisibles à l'œil nu. Plus particulièrement, on cherche à déterminer les positions relatives des câbles métalliques constituant la nappe carcasse d'un pneumatique génie civil.

Ces techniques de contrôles, impliquant l'utilisation de rayons dont l'utilisation doit être scrupuleusement régulée et surveillée, n'est pas sans poser un certain nombre de difficultés. Les coûts occasionnés par ces systèmes et la gestion requise sont ainsi particulièrement élevés. En outre, les dispositifs de contrôle par rayons X ne sont pas aisément transportables. Enfin, ils ne peuvent pas être utilisés sur les sites d'exploitation des véhicules de génie civil.

De plus, on connaît par les demandes de brevet US-A-5095744, GB-A-665153 et US-A-3882717 des dispositifs et des procédés de contrôle par ultrasons de pneumatiques.

Le document US-A-3882717 décrit en particulier un mode de réalisation, dans lequel une tête de contrôle est placée à l'intérieur du pneumatique à contrôler, de façon à émettre des ultrasons vers le pneumatique et à recevoir les ultrasons réfléchis par le pneumatique.

Pour pallier ces différents inconvénients, l'invention prévoit différents moyens techniques.

### EXPOSE DE L'INVENTION

Tout d'abord, un premier objet de l'invention consiste à prévoir un dispositif de contrôle de pneumatiques de grandes dimensions permettant de vérifier l'intégrité des câbles de renfort sans utiliser de rayons X.

Un autre objet de l'invention consiste à prévoir un dispositif de contrôle de pneumatique pouvant être utilisé en usine ou sur un site d'utilisation des pneumatiques, comme par exemple une mine située en région éloignée.

Encore un autre objet de l'invention consiste à prévoir un procédé de contrôle de pneumatiques fonctionnant sans rayon.

Pour ce faire, l'invention prévoit un dispositif de contrôle de pneumatiques de grandes dimensions (préférentiellement des dimensions supérieures à 55 pouces, i.e. 139,70 cm), pour véhicules de génie civil, comprenant :
- un support de pneumatique à entrainement rotatif prévu pour supporter un pneumatique à contrôler en position de façon à ce que son axe de rotation soit sensiblement horizontal, ledit support comprenant des moyens de mise en rotation du pneumatique porté ;
- un dispositif de contrôle à ultrasons pourvu d'une tête de contrôle montée mobile radialement et axialement et apte à appliquer des ultrasons de façon à ce que ceux-ci puissent effectuer un aller-retour entre ladite tête et la surface à contrôler par l'intermédiaire du fluide porteur, d'un module de récupération et de traitement des données d'écho récupérées par ladite tête de contrôle lors des phases de contrôle, et d'un système (manuel ou automatique) de commande du déplacement de ladite tête de contrôle à l'intérieur du pneumatique à contrôler, en particulier le long de paroi interne de la zone sommet dudit pneumatique à contrôler;
- une pompe pour assurer le remplissage en fluide porteur et/ou la vidange de ce fluide au niveau de la zone basse interne de la cavité du pneumatique.

Ce type de dispositif permet d'effectuer des contrôles efficaces soit sur des surfaces ciblées ou sur la totalité des surfaces couvrant des câbles. L'absence de rayons X améliore les conditions sécuritaires d'utilisation pour les opérateurs. Le matériel est transportable, par exemple chez un exploitant de véhicules de génie civil.

En outre, le dispositif de contrôle à ultrasons nécessite la présence d'un fluide à ultrasons. Il est connu, dans certaines solutions de l'état de l'art, d'immerger entièrement le pneumatique dans un tel fluide. Dans un dispositif selon l'invention, le fluide est placé dans le pneumatique suspendu verticalement, ce qui permet de réduire considérablement la quantité de fluide et le coût d'opération. La configuration avec le pneumatique « debout » permet de réduire significativement la surface au sol requise par rapport à la solution courante dans laquelle le pneumatique est posé sur un de ses flancs.

Selon un mode de réalisation avantageux, le module de récupération et de traitement des données d'écho comporte un sous-module de traitement de signal permettant un affichage en temps réel des signaux d'écho récupérés. Un opérateur peut alors effectuer un contrôle visuel en temps réel.

De manière avantageuse, le module de récupération et de traitement des données d'écho comporte un sous-module de traitement de signal permettant de mémoriser les données d'écho. Le stockage des données peut servir à des fins de traçabilité, et/ou pour une consultation ultérieure ou post-traitement des données.

Le dispositif selon l'invention comprend une pompe pour assurer le remplissage en fluide porteur et/ou la vidange de ce fluide au niveau de la zone basse de la cavité du pneumatique. On utilise une limite du niveau de fluide sous l'axe E-E, de façon à éviter tout débordement lors de la rotation du pneumatique et des déplacements de la tête. L'eau reste sensiblement dans la zone basse malgré la rotation du pneumatique du fait de la force gravitationnelle.

**De** manière avantageuse, le support rotatif comprend un bras transversal portant deux roulements sur lesquels les flancs du pneumatique sont posés lors d'un contrôle.

L'invention prévoit également un procédé de contrôle de pneumatiques de grandes dimensions (par exemple supérieur à 55 pouces, i.e. 139,70 cm), pour véhicules de génie civil, comprenant les étapes consistant à:
- positionner un pneumatique à contrôler sur un support de pneumatique à entrainement rotatif prévu pour supporter le pneumatique à contrôler en position de façon à ce que son axe de rotation soit sensiblement horizontal,
- effectuer un remplissage de la zone basse de la cavité interne du pneumatique à l'aide d'un fluide pour ultrasons avec une quantité de fluide suffisante pour permettre un déplacement d'une tête de contrôle sans qu'elle sorte du fluide et en deçà d'une limite de remplissage permettant d'éviter tout débordement de fluide de la cavité;
- positionner une tête de contrôle à l'intérieur de la cavité du pneumatique, dans la zone immergée, à proximité immédiate de la surface à contrôler ;
- effectuer une mise en rotation du pneumatique à une vitesse adaptée aux ondes appliquées à l'aide d'un support comprenant des moyens de mise en rotation du pneumatique porté ;
- appliquer les ultrasons de façon à ce que ceux-ci puissent effectuer un aller-retour entre la tête et la surface à contrôler par l'intermédiaire du fluide porteur, et récupérer les signaux d'écho générés à l'aide de la tête mobile de contrôle du dispositif à ultrasons.

La vitesse angulaire appliquée est prévue pour respecter la résolution spatiale compatible avec la dimension et l'intervalle des câbles constituants l'enveloppe pneumatique. La vitesse est telle que l'onde sonore dispose du temps nécessaire pour faire un aller /retour par l'intermédiaire du fluide porteur permettant de transmettre les ondes entre la tête et la surface à contrôler. Les capteurs sont pilotés afin de reconstituer une image représentative d'une fraction de la nappe carcasse du pneumatique. Les données récupérées peuvent être traitées en temps réel ou à posteriori par un logiciel de traitement de signal. Des outils de manutention sont avantageusement utilisés pour la mise en place et le retrait du pneumatique.

De manière avantageuse, après le passage de la tête de contrôle sur un premier secteur circonférentiel du pneumatique, cette dernière effectue successivement une pluralité de déplacements axiaux, pour permettre le passage de la tête sur une pluralité de secteurs à contrôler.

Le procédé comprend avantageusement une phase d'affichage des données d'écho reçues par la tête à ultrasons. L'affichage permet à un opérateur avisé de statuer sur la conformité du pneumatique objet du contrôle.

**De** manière avantageuse, le procédé comprend par ailleurs une phase de traitement des données d'écho reçues par la tête à ultrasons. Par exemple, un module interpréteur peut être utilisé afin de passer du domaine temporel au domaine spatial.

Egalement de manière avantageuse, le procédé comprend par ailleurs une phase d'enregistrement des données d'écho reçues par la tête à ultrasons.

### DESCRIPTION DES FIGURES

Tous les détails de réalisation sont donnés dans la description qui suit, complétée par la figure unique, présentée uniquement à des fins d'exemples non limitatifs, et dans laquelle:

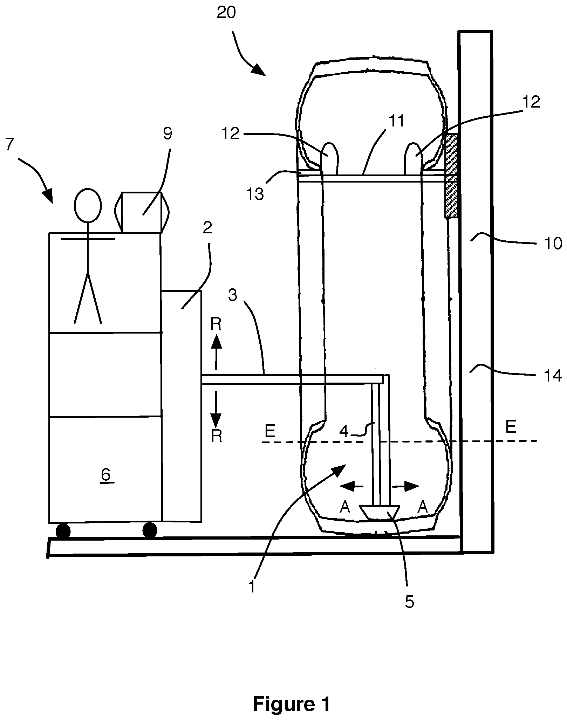

- la figure 1 est une représentation schématique d'un dispositif de contrôle de pneumatique avec une tourelle verticale sur laquelle un pneumatique à contrôler est posé et montré en coupe transversale.

### DESCRIPTION DETAILLEE DE L'INVENTION

Tel qu'illustré à la figure 1, le dispositif de contrôle à ultrasons comprend un support rotatif 10 constitué d'une tourelle verticale 14 dont la hauteur est avantageusement prévue pour correspondre sensiblement à celle des pneumatiques 20 à contrôler. En variante, un mur peut servir de tourelle. Dans la portion supérieure de la tourelle, un bras transversal 11, sensiblement horizontal, s'étend depuis la tourelle sur une longueur sensiblement correspondante à la largeur des pneumatiques 20 à inspecter. Ce bras porte au moins une butée 12 et de préférence deux, tel qu'illustré à la figure 1. Les butées 12 permettent d'assurer la position axiale du pneumatique 20, en particulier lors de sa mise en rotation. Les butées 12 sont agencées pour appuyer contre chacun des bourrelets depuis la cavité du pneumatique. Entre les sièges de bourrelets et le bras 11 transversal, des roulements 13 permettent la mise en rotation du pneumatique porté par le support 10. Le moteur et les éléments de transmission assurant la mise en rotation des roulements sont de type connu en soit et ne sont pas illustrés afin de ne pas alourdir inutilement le schéma. Des moyens de manutention, également connus en soit, permettent de poser et déposer les pneumatiques 20 sur le support 10.

**Un** module de contrôle 1 à ultrasons constitue la partie consacrée à la mise en oeuvre des ultrasons et à la récupération des données d'écho correspondant.

**Une** tête 5 de contrôle montée mobile axialement (pour les déplacements sur la largeur du pneumatique) et radialement (pour assurer un course entre une position d'insertion au-dessus du flanc, et une position de contrôle, avec la tête 5 abaissée contre la paroi interne à contrôler). Cette dernière position est visible à la figure 1. Divers types de tête de contrôle peuvent être utilisés, pouvant être constituées de un ou plusieurs éléments émetteurs/récepteur arrangés linéairement. On utilise par exemple une tête pourvue de trois sondes ultrasons multi-éléments à trente-deux éléments, pilotées par un multiplexeur connecté au module de gestion 8.

Le positionnement et le déplacement de la tête de contrôle 5 peut être assuré de plusieurs façons, comme par exemple à l'aide de bras 3 et 4 télescopiques, ou montées coulissants, comme dans l'exemple de la figure 1. Les flèches R-R et A-A de la figure 1 illustrent respectivement les déplacements dans les directions radiales et axiales. Un module 2 de commande du déplacement porte le bras axial 3 et permet d'assurer la chaîne cinématique jusqu'à la tête de contrôle 5. Un module de gestion 8, prévu par exemple dans le module 2 de commande de déplacement, permet de gérer la génération des ondes et les données d'écho reçues en retour.

Pour assurer la transmissibilité des ondes de la tête vers la surface à contrôler et vice-versa, un fluide de transmission d'ultrasons est utilisé. La position sensiblement verticale du pneumatique permet de remplir la zone basse de la cavité du pneumatique avec une quantité de fluide suffisante pour permettre un déplacement de la tête sans qu'elle sorte du fluide. La ligne E-E indique la limite de remplissage souhaitable pour éviter tout débordement de fluide. Cette limite supérieure est prévue pour éviter tout déversement de fluide hors de la cavité lors des phases de contrôle. Grâce au fluide de transmission d'ultrasons, la tête 5 est immergée pour réaliser les phases de contrôle.

Dans l'exemple de la figure 1, le module 2 de commande de déplacement et la module 8 de gestion sont agencés dans une tourelle 6 de contrôle, sur laquelle un opérateur 7 peut prendre place afin de mieux assurer la gestion finale des opérations. Un écran 9 de contrôle est avantageusement prévu pour permettre à l'opérateur 7 de visualiser les échos en provenance de la tête de contrôle et évaluer la conformité du pneumatique.

Le système fonctionne de la manière suivante: le pneumatique à contrôler est mis en place sur le bras transversal 11 à l'aide d'un chariot élévateur ou autre moyen de manutention. Le fluide couplant est placé dans la zone à mesurer, à l'aide d'une pompe (non montrée). Le fluide couplant est avantageusement de l'eau.

La tête de contrôle 5 est placée dans la zone de contrôle immergée, contre la surface à contrôler. Le pneumatique est mis en rotation. La vitesse de rotation est telle qu'elle respecte la résolution spatiale compatible avec la dimension et l'intervalle des câbles constituants l'enveloppe pneumatique. La vitesse est aussi telle que l'onde sonore dispose du temps nécessaire pour faire un aller /retour dans le fluide.

Les capteurs sont pilotés de telle sorte que l'opérateur est en mesure de reconstituer une image représentative d'une fraction de la nappe carcasse. L'affichage permet à un opérateur avisé de statuer sur la conformité de la nappe carcasse. Les données restent traitables en temps réel ou à posteriori par un logiciel de traitement de signal. Un codeur peut être avantageusement utilisé afin de passer du domaine temporel au domaine spatial.

Pour optimiser la transmissibilité des ondes, des capteurs mesurent la position de la tête de contrôle et un moyen d'ajustement, par exemple un système mécanique de suspension (pneumatique) assure un maintien de la tête perpendiculaire par rapport à la surface du pneu.

Le système et le procédé selon l'invention permettent avantageusement deux types de contrôle : un contrôle produisant des images de sections des produits constitutifs du pneu, ou un contrôle produisant des images de pistes circonférentielles à une profondeur donnée.

Le dispositif proposé permet d'effectuer le contrôle des carcasses d'enveloppes de pneumatiques lourds de grandes dimensions, pour des véhicules de génie civil, typiquement de dimension de 58 pouces à 63 pouces (147,32 cm à 160,02 cm), sans que ces dimensions soient à considérer de manière limitative.

Numéros de référence employés sur les figures
- 1: Module de contrôle
- 2: Module de commande
- 3: Bras axial
- 4: Bras radial
- 5: Tête de contrôle
- 6: Tourelle de contrôle
- 7: Opérateur
- 8: Module de gestion
- 9: Ecran
- 10: Support rotatif
- 11: Bras transversal
- 12: Butées
- 13: Roulements
- 14: Tourelle de support
- 20: Pneumatique
- 21: Zone à contrôler

## Revendications

1. Dispositif de contrôle de pneumatiques de grandes dimensions pour véhicules de génie civil, comprenant :
- un support (10) de pneumatique à entrainement rotatif prévu pour supporter un pneumatique (20) à contrôler en position de façon à ce que son axe de rotation soit sensiblement horizontal, ledit support comprenant des moyens de mise en rotation du pneumatique porté ;
- un module (1) de contrôle à ultrasons pourvu d'une tête (5) de contrôle montée mobile radialement et axialement et apte à appliquer des ultrasons de façon à ce que ceux-ci puissent effectuer un aller-retour entre ladite tête (5) et la surface à contrôler par l'intermédiaire du fluide porteur, d'un module (8) de récupération et de traitement des données d'écho récupérées par ladite tête de contrôle (5) lors des phases de contrôle, et d'un module de commande (2) du déplacement de ladite tête (5) de contrôle à l'intérieur du pneumatique à contrôler, en particulier le long de paroi interne de la zone sommet dudit pneumatique à contrôler ;
- une pompe pour assurer le remplissage en fluide porteur et/ou la vidange de ce fluide au niveau de la zone basse interne de la cavité du pneumatique.

2. Dispositif de contrôle de pneumatiques selon la revendication 1, dans lequel le module (8) de récupération et de traitement des données d'écho comporte un sous-module de traitement de signal permettant un affichage en temps réel des signaux d'écho récupérés.

3. Dispositif de contrôle de pneumatiques selon l'une quelconque des revendications 1 ou 2, dans lequel le module (8) de récupération et de traitement des données d'écho comporte un sous-module de traitement de signal permettant de mémoriser les données d'écho.

4. Dispositif de contrôle de pneumatiques selon l'une quelconque des revendications 1 à 3, dans lequel le support rotatif comprend un bras transversal (11) portant deux roulements (13) sur lesquels les flancs d'un pneumatique à contrôler sont posés lors d'un contrôle.

5. Procédé de contrôle de pneumatiques de grandes dimensions pour véhicules de génie civil, comprenant les étapes consistant à:
- positionner un pneumatique (20) à contrôler sur un support (10) de pneumatique à entrainement rotatif prévu pour supporter le pneumatique (20) à contrôler en position de façon à ce que son axe de rotation soit sensiblement horizontal,
- effectuer un remplissage de la zone basse de la cavité interne du pneumatique à l'aide d'un fluide pour ultrasons avec une quantité de fluide suffisante pour permettre un déplacement d'une tête (5) de contrôle sans qu'elle sorte du fluide et en deçà d'une limite de remplissage (E-E) permettant d'éviter tout débordement de fluide de la cavité ;
- positionner une tête (5) de contrôle à l'intérieur de la cavité du pneumatique, dans la zone immergée, à proximité immédiate de la surface à contrôler ;
- effectuer une mise en rotation du pneumatique à une vitesse adaptée aux ondes appliquées à l'aide d'un support (10) comprenant des moyens de mise en rotation du pneumatique porté ;
- appliquer les ultrasons de façon à ce que ceux-ci puissent effectuer un aller-retour entre la tête (5) et la surface à contrôler par l'intermédiaire du fluide porteur, et récupérer les signaux d'écho générés à l'aide de la tête mobile (5) de contrôle du dispositif à ultrasons.

6. Procédé de contrôle de pneumatiques selon la revendication 5, dans lequel, après le passage de la tête de contrôle sur un premier secteur circonférentiel du pneumatique, cette dernière effectue successivement une pluralité de déplacements axiaux, pour permettre le passage de la tête sur une pluralité de secteurs à contrôler.

7. Procédé de contrôle de pneumatiques selon l'une des revendications 5 ou 6, comprenant par ailleurs une phase d'affichage des données d'écho reçus par la tête à ultrasons.

8. Procédé de contrôle de pneumatiques selon l'une quelconque des revendications 5 à 7, comprenant par ailleurs une phase de traitement des données d'écho reçues par la tête à ultrasons.

9. Procédé de contrôle de pneumatiques selon l'une quelconque des revendications 5 à 8, comprenant par ailleurs une phase d'enregistrement des données d'écho reçues par la tête à ultrasons.

## Patentansprüche

1. Kontrollvorrichtung für große Reifen für Tiefbaufahrzeuge, umfassend:
- eine Rotationsantriebsreifenstütze (10), die dafür vorgesehen ist, einen Reifen (20) abzustützen, dessen Position so kontrolliert werden soll, dass seine Drehachse im Wesentlichen horizontal ist, wobei die Stütze Mittel zum Drehen des getragenen Reifens umfasst;
- ein Ultraschallkontrollmodul (1), das mit einem Kontrollkopf (5), der radial und axial beweglich montiert ist und für das Anlegen von Ultraschallwellen geeignet ist, so dass sich diese zwischen dem Kopf (5) und die zu kontrollierende Oberfläche mittels der Trägerflüssigkeit hin und her ausbreiten, einem Modul (8) zum Wiedergewinnen und Verarbeiten der von dem Kontrollkopf (5) während der Kontrollphasen wiedergewonnenen Echodaten und einem Steuermodul (2) für die Bewegung des Kontrollkopfes (5) innerhalb des zu kontrollierenden Reifens, insbesondere entlang der Innenwand der Kronenzone des zu kontrollierenden Reifens, versehen ist;
- eine Pumpe zum Befüllen und/oder zum Entleeren der unteren Innenzone des Reifenhohlraums mit Trägerflüssigkeit.

2. Reifenkontrollvorrichtung nach Anspruch 1, wobei das Modul (8) zum Wiedergewinnen und Verarbeiten von Echodaten ein Signalverarbeitungs-Submodul für eine Echtzeitanzeige der wiedergewonnenen Echosignale umfasst.

3. Reifenkontrollvorrichtung nach einem der Ansprüche 1 oder 2, wobei das Modul (8) zum Wiedergewinnen und Verarbeiten der Echodaten ein Signalverarbeitungs-Submodul für die Speicherung der Echodaten umfasst.

4. Reifenkontrollvorrichtung nach einem der Ansprüche 1 bis 3, wobei die Drehstütze einen Querarm (11) umfasst, der zwei Rollenmittel (13) trägt, auf denen die Seitenwände eines zu kontrollierenden Reifens während einer Kontrolle angeordnet sind.

5. Verfahren zum Kontrollieren großer Reifen für Tiefbaufahrzeuge, umfassend die folgenden Schritte:
- Positionieren eines zu kontrollierenden Reifens (20) auf einer Rotationsantriebsreifenstütze (10), die dafür vorgesehen ist, den Reifen (20) abzustützen, dessen Position so kontrolliert werden soll, dass seine Drehachse im Wesentlichen horizontal ist,
- Füllen der unteren Zone des inneren Hohlraums des Reifens mit einer Ultraschallflüssigkeit mit einer ausreichenden Flüssigkeitsmenge, um eine Bewegung eines Kontrollkopfes (5) zu ermöglichen, ohne dass dieser die Flüssigkeit verlässt, und um unterhalb einer Füllgrenze (EE) ein Überlaufen von Flüssigkeit aus dem Hohlraum zu vermeiden;
- Positionieren eines Kontrollkopfs (5) innerhalb des Reifenhohlraums in der Unterwasserzone in unmittelbarer Nähe der zu kontrollierenden Oberfläche;
- Drehen des Reifens mit einer Geschwindigkeit, die für die Wellen geeignet ist, die unter Verwendung eines Trägers (10) mit Mitteln zum Drehen des getragenen Reifens angelegt werden;
- Anlegen der Ultraschallwellen, so dass sich diese mit Hilfe der Trägerflüssigkeit zwischen dem Kopf (5) und der zu kontrollierenden Oberfläche hin und her ausbreiten können und Gewinnen der mit dem beweglichen Kontrollkopf (5) der Ultraschallvorrichtung erzeugten Echosignale.

6. Reifenkontrollverfahren nach Anspruch 5, wobei nach dem Durchlauf des Kontrollkopfs über einen ersten Umfangsabschnitt des Reifens der Kontrollkopf mehrere axiale Bewegungen nacheinander durchführt, um den Kopfdurchlauf über mehrere zu kontrollierende Abschnitte zu ermöglichen.

7. Reifenkontrollverfahren nach einem der Ansprüche 5 oder 6, ferner umfassend eine Anzeigephase für die vom Ultraschallkopf empfangenen Echodaten.

8. Reifenkontrollverfahren nach einem der Ansprüche 5 bis 7, ferner umfassend eine Verarbeitungsphase für die vom Ultraschallkopf empfangenen Echodaten.

9. Reifenkontrollverfahren nach einem der Ansprüche 5 bis 8, ferner umfassend eine Aufnahmephase für die vom Ultraschallkopf empfangenen Echodaten.

## Claims

1. Device for inspecting large tyres for civil engineering vehicles, comprising:
- a rotationally driven tyre support (10) designed to support a tyre (20) to be inspected in position so that its axis of rotation is substantially horizontal, said support comprising means for rotating the supported tyre;
- an ultrasound inspection module (1) provided with an inspection head (5) that is freely mounted radially and axially, a module (8) for retrieving and processing echo data retrieved during inspection phases, and a module (2) for controlling the movement of the inspection head (5) inside the tyre to be inspected, in particular along the inner wall of the crown area of said tyre to be inspected.
- a pump for ensuring the filling of carrier fluid and/or for draining this fluid in the lower area of the tyre cavity.

2. Tyre inspection device according to Claim 1, wherein the module (8) for retrieving and processing echo data comprises a signal processing sub-module allowing real-time display of the retrieved echo signals.

3. Tyre inspection device according to any of Claims 1 or 2, wherein the module (8) for retrieving and processing echo data comprises a signal processing sub-module for recording the echo data.

4. Tyre inspection device according to any of Claims 1 to 3, wherein the rotary support comprises a transverse arm (11) supporting two roller bearings (13), on which the sidewalls of a tyre to be inspected are placed during an inspection.

5. Method for inspecting large tyres for civil engineering vehicles, comprising the following steps:
- placing a tyre (20) to be inspected on a rotationally driven tyre support (10) designed to support the tyre (20) to be inspected in position so that its axis of rotation is substantially horizontal;
- filling the lower area of the tyre cavity using an ultrasound fluid with a sufficient amount of fluid to allow the inspection head (5) to move without any fluid escaping and under a desired filling limit (E-E) to avoid any overflowing of fluid from the tyre cavity,
- positioning an inspection head (5) inside the tyre cavity, in the immersed area, in the immediate vicinity of the surface to be inspected;
- rotating the tyre at a speed that is adapted to the applied waves using a support (10) comprising means for rotating the supported tyre;
- applying the ultrasound and retrieving the generated echo signals using the movable inspection head (5) of the ultrasound device.

6. Method for inspecting tyres according to Claim 5, wherein, following the passage of the inspection head on a first circumferential sector of the tyre, said head successively performs a plurality of axial movements, to allow the head to pass over a plurality of sectors to be inspected.

7. Method for inspecting tyres according to any of Claims 5 or 6, further comprising a phase for displaying echo data received by the ultrasound head.

8. Method for inspecting tyres according to any of Claims 5 to 7, further comprising a phase of processing echo data received by the ultrasound head.

9. Method for inspecting tyres according to any of Claims 5 to 8, further comprising a phase of recording echo data received by the ultrasound head.
